## Europäisches Patentamt
## European Patent Office
## Office européen des brevets

(19)

(11) Publication number: **0 199 600**
A2

(12)

# EUROPEAN PATENT APPLICATION

(21) Application number: **86303118.3**

(22) Date of filing: **24.04.86**

(51) Int. Cl.⁴: **B 62 M 3/04**

(30) Priority: **24.04.85 CN 85103089**

(43) Date of publication of application:
**29.10.86 Bulletin 86/44**

(84) Designated Contracting States:
**DE FR GB IT NL SE**

(71) Applicant: **La, Xi
East 101 No. 1 Goaganlou
Haiguangsi Peace District Tianjing(CN)**

(72) Inventor: **La, Xi
East 101 No. 1 Goaganlou
Haiguangsi Peace District Tianjing(CN)**

(74) Representative: **Baillie, Iain Cameron et al,
c/o Ladas & Parry Isartorplatz 5
D-8000 München 2(DE)**

(54) **A pedal mechanism for a bicycle having the pedal crank radially movable thereon.**

(57) A pedal mechanism for a bicycle has a radially movable pedal crank (6) provided thereon. There are also provided guide pulleys (1) which are each fixedly mounted on the frame of the bicycle and constituted by two members (9, 10) relatively rotatable one with the other. The bicycle frame further supports an arrangement formed of a sprocket (4), a plate (5), pins (7) engageable in a slot (2) in sprocket (4) and the pedal cranks (6) so that the length of the crank varies between minimum and maximum values during rotation. The member (10) has a pin hole (13) for receiving the pin (7) which is itself retained in a threaded pin hole (14) in the pedal crank. The mechanism according to the invention preferably has a sprocket (4) with fifty-two teeth, a free wheel sprocket with eighteen teeth, and a drive ratio of 2.88. Owing to the variation the length of the driving arm of a crank, the power consumption can be lowered or operational speed can be increased up to 20% compared with the conventional pedal mechanism for a given input power.

EP 0 199 600 A2

A PEDAL MECHANISM FOR A BICYCLE HAVING THE PEDAL CRANK
RADIALLY MOVABLE THEREON

This invention relates to a pedal mechanism, and particularly for a bicycle with a pedal crank radially movable thereon.

BACKGROUND OF INVENTION

In the prior art, FR-A1-2365474, DE-A1-272204, CH-598050, US4125239 and FR-A-226507 have disclosed various pedal mechanisms with telescopic or radially movable pedal cranks. In these mechanisms, the telescopic movement of the pedal crank is obtained by the arrangement of sleeves, springs, sliding pieces and the like, and the radial movement of the pedal crank is achieved by a cam, planetary gears, or guide pulley with large circular orbit.

It can be seen from these mechanisms that they are all complicated in construction and have a large amount of frictional loss since it is hard for the mechanism to pass through a knee point generated by an eccentric mechanism used therein. For example, in FR-A1-2365474, since a guide pulley with a large circular orbit must be fixed on the outside of a sprocket in order to carry out both rotation of a pedal and radial movement of a pedal crank, the width in the direction of bottom bracket bearing axle thus becomes larger. As the diameter of guide pulley is 350mm, the frictional loss is large during the ball bearing sliding on such a large orbit. Furthermore, there is not provided an arrangement to ensure the pedal crank passes through the knee point generated by an eccentric mechanism thereof so that it is hard to start a bicycle and maintain the operational movement thereof.

OBJECT OF INVENTION:

It is an object of the invention to provide a pedal mechanism which is simple in construction, and has a reduced frictional loss therein over the known art.

It is another object of the invention to provide a pedal mechanism in which the problem of starting and maintaining the operation of a bicycle is substantially perfectly overcome.

## SUMMARY OF INVENTION

These and other objects, features and advantages of the invention are achieved by a pedal mechanism described hereinafter.

A pedal mechanism according to the invention comprises two guide pulleys each consisting of two rotational members with bearings therebetween and being mounted on the frame of a bicycle; a chain sprocket provided with an auxiliary supporting arrangement and a slot therein, the chain sprocket being fixed on the right hand side of a bottom bracket bearing axle; a left hand flange provided with auxiliary supporting arrangements and a slot therein, the left hand flange being fixed on the left hand side of the bottom bracket bearing axle, opposite to the chain sprocket; two pedal cranks; two pins for coupling the cranks to the guide pulleys, respectively, passing through the slot on the chain sprocket and the slot on the left hand flange in order to form a pedal mechanism for a bicycle with cranks which have radially telescopic movement during their rotation. In this way, the pedal mechanism is designed in such a manner that when the pedal cranks are in a position where it is hard for a conventional pedal mechanism to be operated, the arm or moment of force for one of cranks becomes larger, then with the rotation of the cranks, the moment of force becomes smaller, so as to utilize useful work and reduce useless work to save effort for bicycle riding.

This pedal mechanism has the advantageous feature that it has a compact construction due to the guide pulleys being fixed on the inner side of a chain sprocket. Furthermore, since the guide pulleys consist of two members rotatable relatively to each other and ball bearings therebetween, when one of the members is fixed to the frame of a bicycle and the other is rotated through the agency of pins coresponding thereto, it will create, by itself, a kinetic inertia which will ensure the frictional force generated during the movement of pedal crank will be overcome and also ensure the pedal mechanism will pass through the knee point produced by the eccentric arrangement therein, such that for a given output force there is a considerable saving in effort when riding a bicycle using the present invention over the effort required when using a conventional pedal mechanism for a bicycle.

DESCRIPTION OF DRAWINGS

The present invention will now be described by way of example with reference to the accompanying drawings, in which:

Fig. 1 is a cross-sectional view of a pedal mechanism according to the invention;

Fig. 2 is a front view showing a chain sprocket in the pedal mechanism according to the invention; and

Fig. 3 is a front view showing a left-flange in the pedal mechanism according to the invention.

DETAILED DESCRIPTION OF THE INVENTION

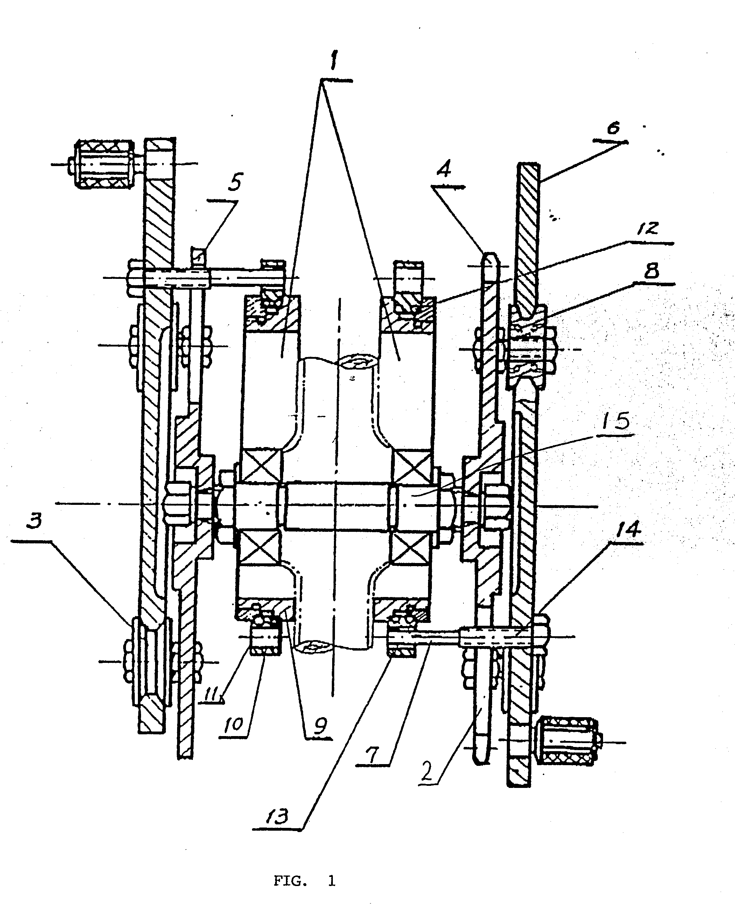

Referring to Figs. 1 through 3, each of a pair of guide pulleys 1 is constituted by an inner ring 9, an outer ring 10 and ball bearings 12 located therebetween. Either inner ring 9 or outer ring 10 is fixed on the frame of a bicycle, with the central axis of the inner ring 9 and outer ring 10 being located in a position spaced from the central axis of a bottom bracket bearing axle 15, in front of the central axis of the bottom bracket bearing axle, relative to the front of the bicycle, such that an amount of 50-80mm for additional length of crank is obtained. Either inner ring 9 or outer ring 10 is provided with at least one pin-hole 13 in which a pin 7 can be pivotally received. Preferably, the inner ring 9 is fixed on the frame of a bicycle and the outer ring 10 is provided with the pin-holes 13. The centre of inner ring 9 is spaced from the bottom bracket bearing axle 15, by a distance of 25mm, in front of the same.

Each of pedal cranks 6 has at least one threaded pin-hole 14 with an inner thread to which pin 7 is fixed. The shape of both cranks corresponds to each other and so do the shape of both channelled pulleys 8 in auxiliary supporting arrangement 3 provided on both chain sprocket 4 and left-flange 5, Fig. 1, respectively. Preferably, two threaded pin-holes are provided on the crank 6 which has a transverse cross-section meshing with the channelled pulley. One end of each of the pins 7 is inserted into a pin-hole on either outer ring 10 or inner ring 9 of each of the guide pulleys and the outer end of the same is fixed by means of thread thereon, as shown in Fig. 1.

Chain sprocket 4 is provided with a slot 2 which is terminated in a position adjacent to the roof of the teeth around the periphery of the sprocket 4, 52 to 82 teeth being provided on the chain sprocket 4 which is connected to the auxiliary arrangements 3 which are of at least one pair of channelled pulleys 8 fixed on the chain sprocket 4 by a central axle thereof. Preferably, a chain sprocket may be used having 52 teeth, a slot provided therein and two pairs of channelled pulleys which are deposited symmetrically about the centre line of the slots and the central axis of the chain sprocket.

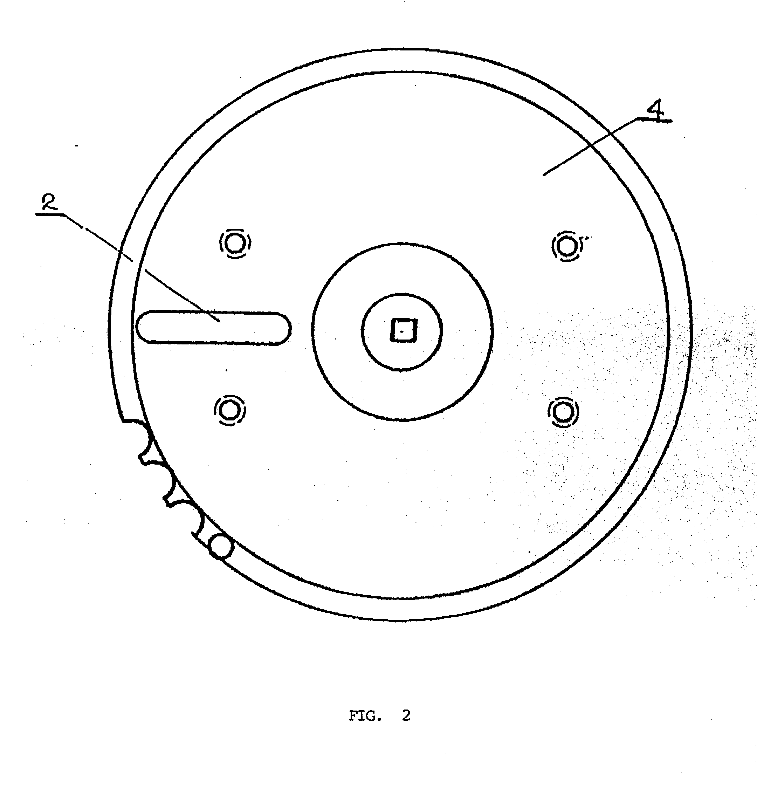

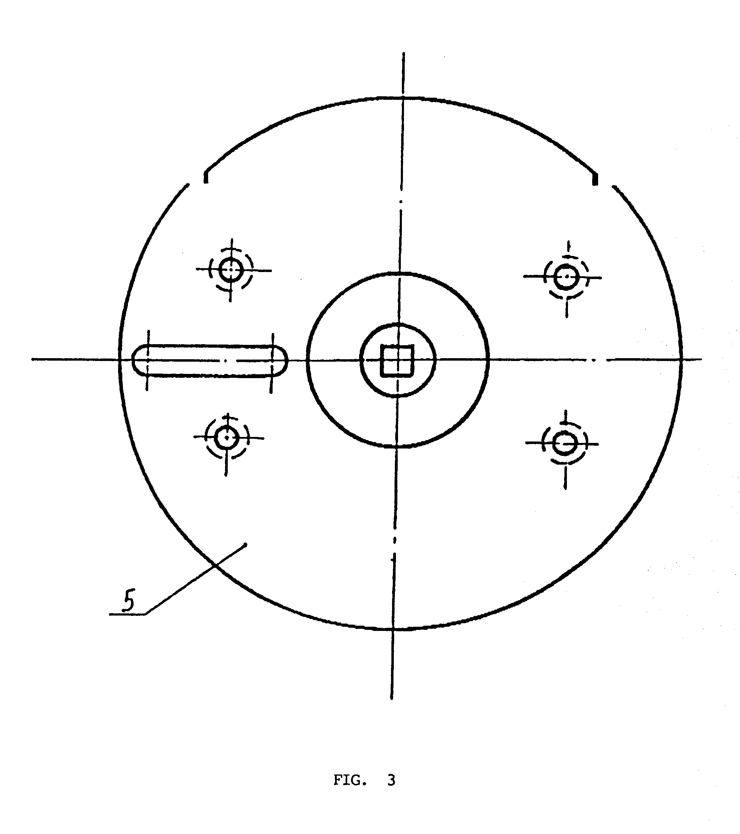

Fig. 3 is a front view showing a left hand flange or plate 5 of the pedal mechanism according to the invention, on which the slot and auxiliary supporting arrangements are the same as those on the chain sprocket 4 described above which reference to Figs. 1 and 2.

According to the embodiment of the invention described herein, when a pedal crank is rotated, the distance between the axis of pin 7 parallel to the axis of bottom bracket bearing axle 15 and the axis of bottom bracket bearing axle, that is, the moment of force for the crank relative to its centre of rotation, varies during the rotation of the pedal crank, since the crank is rotated through the agency of pin 14 around the outer ring 10 which is rotated around the inner ring 9 fixed on the frame of the bicycle and the guide pulley constituted by the outer ring 10, inner ring 9 and ball bearing 12 is eccentrically mounted, thus the pin 14 is slidable in the radial direction of the crank in the slot 2 in the chain sprocket 4 and the left hand plate 5 during the rotation of the crank, such that the moment of force for driving the chain sprocket wheel varies at every different time. Therefore, each of the guide pulleys should be designed in a manner in which the moment of force of the crank relative to its centre of rotation is longer when the pedal crank is in a position where a conventional pedal mechanism can not effectively be operated and becomes shorter due to the eccentric effect of the guide pulley to save effort when bicycle riding. Furthermore, since the ball bearings are provided between the outer ring 10 and inner ring 9 of each of the guide pulleys, it is possible for the crank to pass easily through the knee point generated by the eccentricity of the guide pulley by the kinetic inertia of the crank.

The pedal mechanism according to the invention is mounted on the frame of a bicycle in which the chain sprocket 4 has 52 teeth, free wheel sprocket has 18 teeth and the drive ratio is 2.88. The moment of force varies in the range of 50-80mm, thus the power consumption can be lowered or operational speed can be increased by up to 20% compared with conventional pedal mechanisms for a given input power.

Although the present invention is explained referring to the particular embodiment described above, it should be understood that any modification and change in construction can be made without departing from the scope of the invention defined by appended claims. In particular, although ball bearings are provided between the inner and outer rings of the guide pulleys, other bearings can be used.

CLAIMS:

1.    A pedal mechanism for a bicycle having pedal cranks radially movable therein mounted on the frame of a bicycle comprising chain sprocket (4), guide pulleys (1) and the pedal cranks (6) radially movable, two guide pulleys being mounted in front of a bottom bracket bearing axle (15) and on each side thereof respectively including two members (9) and (10) relatively rotatable to each other with bearings (12) therebetween, a plate (5) being provided on the opposite side of said bottom backet bearing axle to that side at which the said chain sprocket is located, said two members of said guide pulleys being relatively rotatable to each other; through the agency of the chain sprocket (4) provided with a slot (2) therein and said plate and pin (7) so that said pedal cranks (6) at the time when they are rotated are slidable radially along the auxiliary supporting arrangement provided on said chain sprocket and said plate.

2.    A pedal mechanism according to claim 1, characterised in that said two guide pulleys (1) are mounted on the frame of a bicycle and comprise an inner ring (9), an outer ring (10) and ball bearings (12) therebetween.

3.    A pedal mechanism according to claim 1 or 2, characterised in at least one pin-hole (13) in which pin (7) is pivotally received is provided on either inner ring or outer ring of said guide pulleys, said guide pulleys being fixed by either the inner or the outer ring whose centre is remote from the bottom bracket bearing axle (15) of the bicycle.

4.    A pedal mechanism according to claim 1, characterised in that the slot (2) in said chain sprocket (4) is terminated adjacent to the roof of the teeth of said chain sprocket and adapted for movement of the said pin (7) therein, and wherein the auxiliary support arrangements (3) are constituted by at least one pair of the channelled pulleys (8) pivotally mounted on the sprocket by the central axle of each pulley (8).

5. A pedal mechanism according to claim 1, characterised in that said plate (5) comprises a slot (2) adapted for the movement of said pin (7) therein, and wherein the auxiliary support arrangements are constituted by at least one pair of said channelled pulleys (8) each pivotally mounted on the plate by the central axle of each pulley (8).

6. A pedal mechanism according to claim 1, characterised in that said pedal crank comprises a transverse cross-section meshing with said channelled pulley (8) and has at least one threaded pin-hole (14) in which a pin (7) is fixed.

7. A pedal mechanism according to claim 1, characterised in that one end of said pin (7) is provided with a thread by which said pin is meshed with said threaded pin-hole.

0199600

1/3

FIG. 1

FIG. 2

FIG. 3